**Europäisches Patentamt**

**European Patent Office**

**Office européen des brevets**

(19)

(11) Publication number: **0 088 539**
**A1**

# EUROPEAN PATENT APPLICATION

(12)

(21) Application number: **83300804.8**

(22) Date of filing: **17.02.83**

(51) Int. Cl.³: **G 05 B 23/02**

(30) Priority: **10.03.82 GB 8206993**

(43) Date of publication of application: **14.09.83**
**Bulletin 83/37**

(84) Designated Contracting States: **DE FR GB IT NL**

(71) Applicant: **IMPERIAL CHEMICAL INDUSTRIES PLC, Imperial Chemical House Millbank, London SW1P 3JF (GB)**

(72) Inventor: **Carr, Edward Houghton, 33 Almond Grove Fairfield, Stockton-on-Tees Cleveland (GB)**
Inventor: **Knight, Harry Wilson, 34 Woodland Way Hurworth Place, Darlington, Co. Durham (GB)**
Inventor: **Turnock, Richard Charles, 33 Whitehouse Road Wolviston Court Estate, Billingham Cleveland (GB)**

(74) Representative: **Gratwick, Christopher et al, Imperial Chemical Industries PLC Legal Department: Patents Thames House North Millbank, London SW1P 4QG (GB)**

(54) **Trip system.**

(57) A trip system (TA) e.g. for chemical plant, incorporating a computer to check on malfunctions. The inputs and outputs (DPU1, DPU2) of the trip apparatus (TA) are fed to data processing means producing signals indicative of the input and output states of the trip apparatus (TA). One of these signals produces, by reference to a programmed «model», a signal indicative of what output (or input) state should correspond to the actual input (or output) state. The signal indicative of the predicted output (or input) state is compared in a comparator (C) with the signal corresponding to the actual output (or input) state (DPU1, DPU3, DPU2). Any difference between the actual and predicted states indicates a malfunction.

ACTORUM AG

## Trip System

This invention relates to a trip system.   In the operation of machinery, chemical or other processes etc., it is often desirable to provide trip apparatus to actuate a device, e.g. valve, motor, brake, heater, etc., when a monitored parameter, e.g. temperature, pressure, flow rate, degree of travel etc., reaches a predetermined, trip, value.

The device monitoring the parameter, and its associated cabling supplying an electrical signal from the device to the input of the trip apparatus is hereinafter termed the input field circuit. Likewise the device that it is desired to be actuated by the trip apparatus, and its associated cabling supplying the actuating electrical signal from the output of the trip apparatus is hereinafter termed the output field circuit.

When the monitored parameter reaches its predetermined trip value, a trip input signal is applied to the input of the trip apparatus via the input field circuit.   In response to a trip input signal it is desired that the trip apparatus should produce a trip output signal which is fed to the device to be actuated via the output field circuit.

The trip apparatus may have a plurality of inputs and outputs.   It may be desired to arrange for a variety of different trip functions:

(i)          a particular output gives a trip output signal when one particular input has a trip input signal;

(ii)         when one or more inputs have a trip input signal, the trip apparatus produces trip output signals, possibly in a predetermined sequence and/or at predetermined intervals, at a combination of outputs;

(iii)    trip output signals are produced at different combinations of outputs, and/or in difference sequences, and/or at different predetermined intervals, depending on which input, or combination of inputs, have trip input signals;

(iv)    the sequence of occurrence, and/or the intervals between, trip input signals at a plurality of inputs modifies which output, or combination of outputs, have trip output signals, and/or the sequence, and/or the time intervals between the production of the trip output signals.

The particular trip functions required will of course depend on the nature and design of the equipment or process to which the trip system is to be applied. In some cases the sequence of, and/or time intervals between, trip input and/or trip output signals may be irrelevant.

An particular combination of input signals to the trip apparatus is herein termed an input state, while any particular combination of output signals from the trip apparatus is herein termed an output state. Where one or more of the input and/or output signals is a trip signal, the respective input and/or output state is termed a trip input and/or trip output state as appropriate.

In a complex arrangement where there are a plurality of inputs and outputs, for example in an automated engineering complex or in a chemical plant, it may be difficult to check on the functioning of the trip apparatus and its field circuits manually.

In the present invention this difficulty is overcome by the use of programmable data processing means by which term we include not only main-frame computers but also other programmable data processing means including mini-computers, micro-processors, programmable logic controllers and the like. The data processing means is programmed to store a 'model' of the trip apparatus so that it can reproduce the desired functions of the trip apparatus, i.e. which output state should be produced in response to each input state. Alternatively, or additionally, the data processing means may be programmed so that it can reproduce the reverse function, i.e. what input state is necessary to produce any particular output state.

Therefore, according to the present invention, we provide a trip system comprising

(i)       trip apparatus having a plurality of inputs and outputs,

(ii)      means to generate first and second signals,
          said first signal representing either the input state or the output state of said trip apparatus, and said second signal representing the other of said input and output states of said trip apparatus,

(iii)     programmed data processing means,

(iv)      means to feed said first signal to said data processing means,

said data processing means being programmed

          (a)  to store a model of the trip apparatus, and
          (b)  in response to said first signal, to produce from said model a third signal representing the state which said second signal should represent, and

(v)       means responsive to said second and third signals to indicate any difference therebetween.

Where the first signal represents the input state of the trip apparatus, and the second signal represents the output state, the data processing means operates in what is herein termed as the forward mode.

In this mode, in response to the first signal, the data processing means predicts from the model the corresponding desired output state and produces a third signal representative thereof. The means responsive to the second and third signals thus indicates any difference between the actual and predicted output states, thus indicating whether the trip system is functioning correctly.

Any disagreement between the actual and predicted output states is indicative that

(a) there is a malfunction in the trip apparatus and/or its associated field circuits or

(b) there is a malfunction in the data processing means. The latter type of malfunction is generally readily distinguished, by the operator, from the former type of malfunction, since data processing means malfunctions, including programming errors, tend to result in unreasonable output from the data processing means.

When operating in the reverse mode, i.e. where the first signal represents the output state of the trip apparatus, the operation of the data processing means is analogous, so that the means responsive to the second and third signals indicates whether there is any difference between the actual input state and the input state that is predicted to give rise to the actual output state.

In a preferred form, the second signal is also fed to the data processing means which itself effects the comparison between the second and third signals to produce a signal indicative of any difference between the second and third signals.

In a preferred form of the trip system, the means to generate the first and second signals comprises a second data processing means, e.g. a micro-processor, to which the signals at all the inputs and outputs of the trip apparatus are fed. The second data processing means generates the first and second signals and feeds the first signal to the first data processing means. On receipt of the third signal from the first data processing means, the second data processing means may itself compare the second and third signals, and provide a signal indicative of any difference therebetween. Alternatively the second data processing means feeds both the first and second signals to the first data processing means which effects the comparison between the second and third signals.

The first or second, where employed, data processing means may also be arranged to provide a record of the functioning of the trip apparatus and its field circuits. Also it may be arranged to indicate that there is not only a difference between the second and third signals, thus indicating a malfunction, but also how the input and/or output states differ, thus pinpointing where the malfunction resides.

In a refinement of the invention, in the event of a difference occurring between the second and third signals in response to a first signal representing a particular input or output state, in addition to an indication of such a difference being given, the system may be arranged so that the actual input or output state represented by the second signal is altered.

An example of suitable trip apparatus is described in our EP-A-63012 (equivalent to USSN 366348), the disclosure of which is incorporated herein by reference. In that application circuitry is also described for providing trip output signals in sequence and for providing a trip output signal only after a predetermined interval after receipt of a trip input signal.

While reliable trip apparatus is known, malfunctions may occur in a complex system as a result of human error in the interconnections within the trip apparatus between the various inputs and outputs. Malfunctions may occur with greater frequency in the field circuits.

The cabling of the field circuits may often be lengthy, because of the need to have a centralised trip apparatus with the monitoring and actuating devices remote from one another and/or from the trip apparatus. Also the monitoring and/or actuating devices may be exposed to non-ideal conditions, e.g. damp, dirty, or corrosive environments giving rise to the possibility of malfunction of the devices.

In addition to malfunction of the monitoring and/or actuating devices themselves, e.g. as a result of dirty contacts, short or open circuits, seized valves etc., the field circuit cabling may develop faults e.g. short or open circuits, abnormally high or low resistance, leakages to earth, and/or acidental application of

0088539

B.32217

high voltages.

These malfunctions in the field circuits may give:

(i)     a false indication of a trip input signal, with consequent production of an unwanted trip output signal,

(ii)    failure to produce a trip input signal when a monitored parameter reaches its trip value,

(iii)   a trip output signal failing to cause actuation of the device in that output field circuit, or

(iv)    actuation of the device in an output field circuit without a trip output signal being applied thereto.

In the aforesaid EP-A-63012 we describe a technique whereby the 'health' of the input and/or output field circuits is monitored. This monitoring works on the principle of providing signals indicative of whether the potential difference across the inputs and/or outputs of the trip apparatus, and/or between the inputs and/or outputs and earth, vary from within predetermined limits.

Depending on the design of the trip apparatus and field circuits and on precisely which potential differences are monitored, one or more of the following malfunctions or potential malfunctions in the field circuits can be detected:

(a) open circuit

(b) short circuit

(c) earth leakage

(d) abnormally high resistance

(e) abnormally low resistance

(f) high voltages.

These signals indicative of the health of the field circuits may, if desired, be considered as part of the input state and/or output state of the trip apparatus. Hence the first signal fed to the data processing means and the second signal with which the third signal is compared may also reflect the 'health' of the appropriate field circuits.

In our EP-A-63011 (equivalent to USSN 366351) the disclosure of which is incorporated herein by reference, we describe equipment for testing electrical devices such as solenoid operated valves, motors, heaters etc., which can form the devices to be actuated by the output of the trip apparatus.

When used in conjunction with a trip apparatus, this equipment operates on the principle of producing a trip output signal to the device under test to cause the device to actuate to commence the operation effected by the device, and, when the operation has proceeded to a predetermined extent or after a predetermined time, which ever occurs first, removing the trip output signal so that the device is resored to its untripped state, and producing a signal indicative of which event caused removal of the trip output signal.

Such test equipment may be coupled to, or embodied in, the trip system and the appropriate signals fed to the data processing means.

For example, it may be arranged that when a particular input state occurs, such a test of a device in an output field circuit is required. The data processing means may merely give an indication that such a test is necessary or may be programmed to initiate the test.

In a further refinement the system is arranged so that, depending on the result of a test, an input or output state is altered, e.g. a trip input or output state is initiated, modified, or terminated.

One embodiment of the invention is illustrated with reference to the accompanying block diagram.

In this embodiment the trip system is shown having six inputs (I1 to I6) and four outputs (O1 to O4).

The inputs are fed not only to the trip apparatus, TA, but also to a data processing unit DPU1 which generates a first signal S1 indicative of the input state corresponding to the input signals. Likewise the outputs are fed to a data processing unit DPU2 which generates a second signal S2 indicative of the output state corresponding to the output signals. The first signal is fed from DPU1 to a data processing unit DPU3 in which is stored a "model" of the trip apparatus.   In response to the first
signal DPU3, by reference to the model, produces a third signal S3
indicative of the output state produced by the model in response
to the first signal S1.   Signals S2 and S3 are fed, from DPU2
and DPU3 respectively, to a comparator C which produces a signal SD
indicative of the difference, if any, between the output states denoted
by signals S2 and S3.   Signal SD is fed to data processing unit DPU4
which decodes signal SD and provides an input signal SI to a display
unit D which indicates the difference, if any, between the output
states corresponding to signals S2 and S3.

It will be appreciated  that some or all of the data
processing units DPU1 - DPU4 may be a single data processing unit
and may also include the comparator C.

0088539

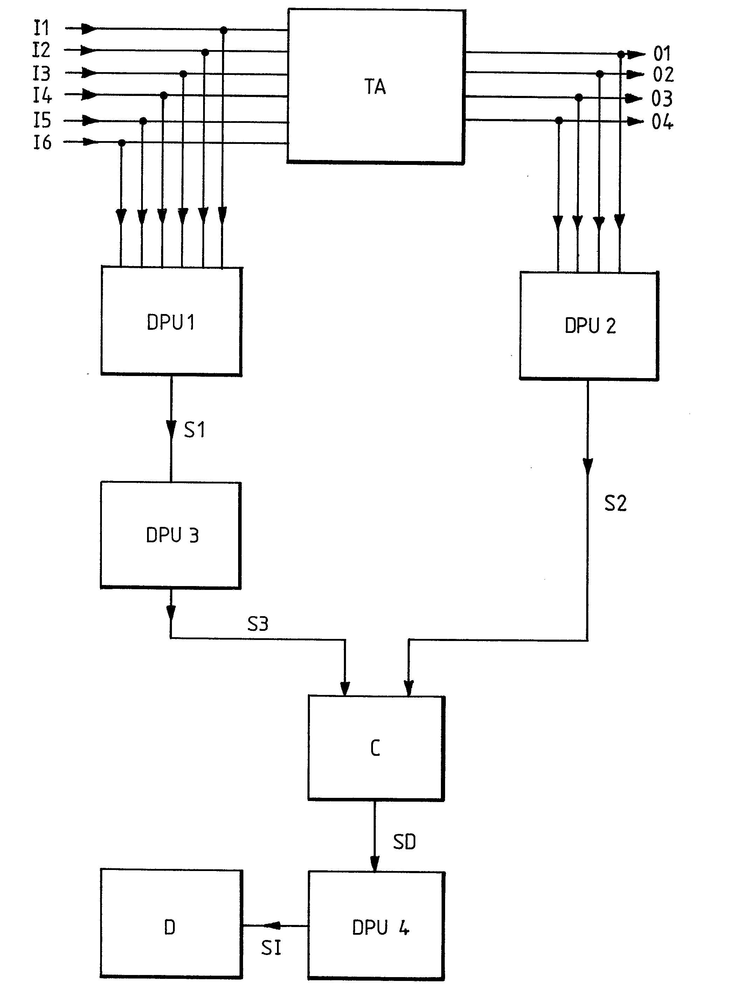

Claims

1. A trip system comprising:

(i) trip apparatus having a plurality of inputs and outputs,

(ii) means to generate first and second signals, said first signal representing either the input state or the output state of said trip apparatus, and said second signal representing the other of said input and output states of said trip apparatus,

(iii) programmed data processing means,

(iv) means to feed said first signal to said data processing means,

said data processing means being programmed:

     (a) to store a model of the trip apparatus, and

     (b) in response to said first signal, to produce from said model a third signal representing the state which said second signal should represent, and

(v) means responsive to said second and third signals to indicate any difference therebetween.

2. A trip system according to claim 1 wherein the means to generate said first and second signals comprises second data processing means.

3. A trip system according to claim 2 wherein said third signal is fed to said second data processing means which also effects the comparison between said second and third signals.

4. A trip system according to claim 2 wherein said first and second signals are fed from said second data processing means to said first data processing means which also effects the comparison between said second and third signals.

0088539

European Patent
Office

EUROPEAN SEARCH REPORT

Application number

EP 83 30 0804

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,A | CH-A- 565 407 (SIEMENS-ALBIS AG) <br> * Claim 1; column 2, line 2 - column 3, line 40; figure 1 * | 1,3,4 | G 05 B 23/02 |
| A | DE-B-2 530 920 (LICENTIA) <br><br> * Column 2, line 31 - column 2, line 30; figure 1 * | | |
| A | US-A-3 440 504 (B. BOSKOVICH et al.) <br> * Claim 1; abstract; figure 1 * | | |

TECHNICAL FIELDS
SEARCHED (Int. Cl. 3)

G 05 B 23/02

The present search report has been drawn up for all claims

| Place of search <br> BERLIN | Date of completion of the search <br> 03-06-1983 | Examiner <br> LEMMERICH J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82